# EUROPÄISCHE PATENTSCHRIFT

(11) **EP 2 764 964 B1**
(45) Veröffentlichungstag und Bekanntmachung des Hinweises auf die Patenterteilung: **01.01.2020**
(21) Anmeldenummer: 13000589.5
(22) Anmeldetag: 06.02.2013
(51) Int. Cl.: B26D 7/26, F16B 39/32, F16B 35/04, F16B 1/00, F16B 5/06, F16B 35/06, F16B 37/04, B26D 7/18

(54) **Ausbrechwerkzeug zum Ausbrechen von Stanzabfällen bei der Herstellung von Zuschnitten aus einem Bogen, mit einem Sicherungselement**
Breakaway tool for breaking out stamping by-products in the production of blanks from a sheet and having a securing element
Outil de décorticage destiné à décortiquer des déchets d'une presse lors de la fabrication de sections à partir d'une feuille et ayant un élément de sécurisation

(43) Veröffentlichungstag der Anmeldung: 13.08.2014
(73) Patentinhaber: Cito-System GmbH, 90571 Schwaig bei Nürnberg (DE)
(72) Erfinder: Vukovich, Stefan, 3040 Neulengbach (AT)
(74) Vertreter: Liebl, Thomas

(56) Entgegenhaltungen:
- US-A- 3 303 979
- US-A1- 2009 272 499

## Beschreibung

Die Erfindung betrifft ein Ausbrechwerkzeug zum Ausbrechen von Stanzabfällen bei der Herstellung von Zuschnitten aus einem Bogen nach dem Oberbegriff des Anspruchs 1.

Ein derartiges Ausbrechwerkzeug zum Ausbrechen von Stanzabfällen bei der Herstellung von Zuschnitten mit bestimmten Kantenverläufen aus einem Bogen aus Pappe, Papier, Kunststoff, einem Verbundwerkstoff oder dergleichen ist allgemein bekannt (zum Beispiel aus der US 3 303 979 A oder der US 2009/272499 A1) und wird regelmäßig in einer sogenannten Ausbrechstation eingesetzt, die zum Beispiel Bestandteil einer Bogenstanzmaschine ist oder auf eine solche folgt.

Ein derartiges Ausbrechwerkzeug wird regelmäßig durch ein Werkzeug-Oberteil und ein Werkzeug-Unterteil ausgebildet. Das Werkzeug-Oberteil weist nach unten in Richtung Werkzeug-Unterteil abstehende Ausbrechelemente auf, die insbesondere durch Ausbrechstifte und/oder Ausbrechplatten gebildet sind. Diesen Ausbrechelementen sind Durchbrüche im Werkzeug-Unterteil zugeordnet, durch die ein entsprechend zugeordnetes Abfallteil eines in das Ausbrechwerkzeug eingebrachten Bogens bei einer aufeinander zugerichteten Verlagerung von Werkzeug-Oberteil und Werkzeug-Unterteil durch- bzw. eindrückbar ist, um die Abfallteile von dem Bogen abzutrennen. Die Form der Durchbrüche entspricht dabei der Form der abzutrennenden Abfallteile.

Weiterhin sind am Werkzeug-Oberteil Schaumstoffteile angeordnet, die den Bogen bei einem Ausbrechvorgang fixieren sollen. Diese Schaumstoffteile sind zudem so ausgebildet und im Zwischenraum zwischen dem Werkzeug-Oberteil und dem Werkzeug-Unterteil angeordnet, dass diese das Werkzeug-Unterteil und das Werkzeug-Oberteil beim Transport, nicht jedoch im Betrieb, d.h. bei in die Maschine eingesetztem Ausbrechwerkzeug, in einem definierten Abstand zueinander halten.

Obwohl mit einem derartigen Aufbau bereits eine relativ gute Transportsicherung zur Verfügung gestellt wird, bei der das Werkzeug-Oberteil und das Werkzeug-Unterteil in einem definierten Abstand zueinander gehalten werden, hat es sich gezeigt, dass es bei bestimmten Transportsituationen, insbesondere bei einer größeren von unten her auf das Werkzeug-Unterteil einwirkenden Kraft zu einer aufeinander zugerichteten Relativverlagerung von Werkzeug-Oberteil und Werkzeug-Unterteil kommen kann, bei der die Schaumstoffteile zusammengedrückt werden. In Folge dieser Relativverlagerung können dann die Ausbrechstifte und die Ausbrechplatten auf der Unterseite des Werkzeug-Unterteils, durch die Durchbrüche hindurch, nach außen vorstehen bzw. die Werkzeug-Unterplatte rückseitig überragen und somit gegebenenfalls beim weiteren Transport oder bei der Lagerung beschädigt werden.

Demgegenüber ist es Aufgabe der vorliegenden Erfindung, ein Ausbrechwerkzeug zum Ausbrechen von Stanzabfällen bei der Herstellung von Zuschnitten aus einem Bogen zur Verfügung zu stellen, mittels dem die Gefahr einer Beschädigung der Ausbrechelemente beim Transport des Ausbrechwerkzeugs verringert ist.

Diese Aufgabe wird gelöst mit den Merkmalen des Patentanspruchs 1. Weitere vorteilhafte Ausgestaltungen hierzu sind Gegenstand der darauf rückbezogenen Unteransprüche.

Gemäß Patentanspruch 1 wird ein Ausbrechwerkzeug bzw. ein Sicherungselement zur Verwendung mit einem Ausbrechwerkzeug vorgeschlagen, das ein ein- oder mehrteilig ausgebildetes Werkzeug-Oberteil und ein ein- oder mehrteilig ausgebildetes Werkzeug-Unterteil aufweist, wobei das Werkzeug- Oberteil und das Werkzeug-Unterteil zwei relativ zueinander verlagerbare Werkzeugteile ausbilden. Wenigstens eines der Werkzeugteile, insbesondere das Werkzeug-Unterteil, weist wenigstens einen Durchbruch auf, dem am anderen Werkzeugteil wenigstens ein Ausbrechelement zugeordnet ist. Erfindungsgemäß ist für eine lagegenaue Positionierung der beiden Werkzeugteile relativ zueinander wenigstens ein Sicherungselement vorgesehen, das durch eine in einem Werkzeugteil ausgebildete oder angeordnete Schraubmutter und weiter durch eine Gewindeschraube gebildet ist, wobei die Gewindeschraube in einer Ausbrechwerkzeug-Verriegelungsstellung mit einem Schraubenschaft durch eine Schraubausnehmung in dem anderen Werkzeugteil hindurchgeführt und mit einem sich über einen definierten Schraubenschaftbereich erstreckenden Gewinde, insbesondere mit einem sich über einen einseitigen Schraubenschaftteilbereich erstreckenden Gewinde, in die Schraubmutter eingeschraubt ist. Weiter wird erfindungsgemäß vorgeschlagen, dass an der Gewindeschraube wenigstens ein Mittel bzw. Element vorgesehen ist, das in der Ausbrechwerkzeug-Verriegelungsstellung eine aufeinander zugerichtete Relativverlagerung der beiden Werkzeugteile verhindert und/oder diese in einem vordefinierten Abstand zueinander hält. Besonders bevorzugt ist hierbei eine Ausgestaltung, bei der das wenigstens eine Mittel bzw. Element durch wenigstens ein an dem Schraubenschaft der Gewindeschraube ausgebildetes oder angeordnetes, erhabenes Hintergriffelement gebildet ist, das das zugeordnete Werkzeugteil, insbesondere im Bereich der Schraubausnehmung, in der Ausbrechwerkzeug-Verriegelungsstellung hinter- und/oder untergreift.

Mit einer derartigen erfindungsgemäßen Lösung wird somit auf einfache und funktionssichere Weise sichergestellt, dass Relativbewegungen zwischen dem Werkzeug-Oberteil und dem Werkzeug-Unterteil vermieden werden, sodass die Ausbrechelemente nicht mehr auf der Rückseite des jeweils zugeordneten Durchbruch-Werkzeugteils hervorragen können. Ferner wird dadurch auf einfache Weise eine gewünschte Zentrierung der Werkzeugteile erreicht, dass heißt, dass das Werkzeug-Oberteil und das Werkzeug-Unterteil insgesamt während des Transportes in einer gewünschten Relativposition zueinander gehalten werden, so dass das jeweilige Ausbrechwerkzeug im mittels der erfindungsgemäßen Sicherheitselemente gehaltenen Zustand einfachst in der Ausbrechstation bzw. Maschine positioniert werden kann und die Maschine nach Lösen der Sicherheitselemente schnell und ohne aufwendiges Nachjustieren der Werkzeugteile einsatzbereit ist.

Eine derartige erfindungsgemäße Lösung kann auf herstellungstechnisch und fertigungstechnisch einfache Weise direkt an der Gewindeschraube angeordnet werden.

Das wenigstens eine Hintergriffelement wird dabei besonders bevorzugt an einem gewindefreien Schraubenschaftteilbereich des Schraubenschafts vorgesehen, an dem sich dann zum Schraubenschaftende hin das Gewinde mittelbar oder unmittelbar anschließt. Eine derartige Anordnung des Hintergriffelementes am gewindefreien Schraubenschaftteilbereich stellt auf einfache Weise sicher, dass die Schraubwirkung der Gewindeschraube nicht beeinträchtigt wird und ermöglicht zudem die Ausgestaltung einer bevorzugten Hintergriffsverbindung, bei der das wenigstens eine Hintergriffelement das zugeordnete Werkzeugteil unmittelbar im Bereich der Schraubausnehmung unter und/oder hintergreift. Eine derartige konkrete Ausgestaltung ist, wie dies nachfolgend noch näher beschrieben wird, auf fertigungstechnisch und herstellungstechnisch einfache Weise herstellbar und zeichnet sich zudem durch eine hohe Funktionssicherheit aus.

Das Hintergriffelement kann dabei grundsätzlich auf unterschiedliche Art und Weise ausgebildet werden, zum Beispiel rastnasenförmig oder dergleichen. Für eine besonders stabile Hintergriffverbindung wird gemäß einer bevorzugten Ausgestaltung vorgeschlagen, dass das wenigstens eine Hintergriffelement keilförmig ausgebildet ist und eine in Richtung zur Hintergriffsverbindung zu ansteigende Rampenform aufweist. In Verbindung mit einer derartigen Ausgestaltung ist bevorzugt vorgesehen, dass diese Rampe in der Ausbrechwerkzeug-Verriegelungsstellung mit einer Rampenstirnseite an dem zugeordneten Werkzeugteil anliegt. Dadurch wird eine besonders stabile und funktionssichere Verriegelung der Schraubverbindung und damit auf besonders funktionssichere Weise eine Relativverlagerung der beiden Werkzeugteile verhindert. Alternativ dazu könnte aber auch grundsätzlich vorgesehen sein, dass mittels der Hintergriffverbindung ein definierter Mindestabstand zwischen den beiden Werkzeugteilen eingestellt wird, das heißt, dass die Rampe gegebenenfalls in einem definierten Abstand zu dem zugeordneten Werkzeugteil liegt. Bevorzugt ist jedoch eine konkrete Ausgestaltung, bei der die Hintergriffsverbindung so ausgebildet ist, dass die Relativverlagerung der beiden Werkzeugteile zueinander im Wesentlichen blockiert ist.

Grundsätzlich besteht des Weiteren die Möglichkeit, dass mehrere voneinander in Schraubenschaft-Umfangsrichtung voneinander beabstandete Hintergriffelemente am Schraubenschaft angeordnet sind. Gemäß einer besonders bevorzugten und fertigungstechnisch einfach und preiswerten Ausgestaltung wird jedoch vorgeschlagen, am Schraubenschaft ein einziges Hintergriffelement vorzusehen.

Die Schraubausnehmung selbst kann ebenfalls wiederum grundsätzlich auf unterschiedlichste Weise mit unterschiedlichsten Geometrien ausgebildet werden. Gemäß einer besonders bevorzugten Ausgestaltung wird vorgeschlagen, dass die Schraubausnehmung im Werkzeugteil als zylindrische Ausnehmung ausgebildet ist, die den zylindrischen Schraubenschaft in der Ausbrechwerkzeug-Verriegelungsstellung form- und konturangepasst mit einem definierten Spaltmaß umschließt. Die zylindrische Ausnehmung weist dabei eine der Anzahl der Hintergriffelemente entsprechende Anzahl von ausnehmungsrandseitigen Durchführschlitzen auf, durch die beim Durchführen des Schraubenschaftes durch die Schraubausnehmung dann das wenigstens eine Hintergriffelement durchführbar ist bzw. durchgeführt wird. Eine derartige konkrete Ausgestaltung ermöglicht eine qualitativ hochwertige lagegenaue Positionierung der beiden Werkzeugteile relativ zueinander, wobei auch Querbewegungen der Werkzeugteile (quer zur Verlagerungsrichtung der Werkzeugteile) zuverlässig und funktionssicher ausgeschlossen werden können.

Für den bevorzugten Anwendungsfall, bei dem am Schraubenschaft ein einziges Hintergriffelement vorgesehen ist, wird gemäß einer weiteren besonders bevorzugten Ausgestaltung vorgeschlagen, dass diesem einzigen Hintergriffelement im Bereich der Schraubausnehmung ein Durchführschlitz dergestalt zugeordnet ist, dass die Schraubausnehmung eine insgesamt schlüssellochartige Form aufweist. Mit einer derartigen geometrischen Ausgestaltung wird die Positionierung der Gewindeschraube wesentlich vereinfacht und die korrekte, lagegenaue Zuführung der Gewindeschraube zur Herstellung der Schraubverbindung sichergestellt, was nachfolgend in Verbindung mit den optionalen Positioniermarkierungen nochmals zusätzlich verdeutlicht wird.

Die Gewindeschraube weist bevorzugt einen Schraubenkopf auf, der in der Ausbrechwerkzeug-Verriegelungsstellung in einer Anlageverbindung an dem Werkzeugteil anliegt und/oder der einen zugeordneten Ausnehmungsrandbereich zwischen sich und dem wenigstens einen Hintergriffelement aufnimmt. Mittels eines derartigen Schraubenkopfes kann somit auf einfach und zuverlässige Weise sichergestellt werden, dass ein zugeordneter Ausnehmungsrandbereich zwischen dem Schraubenkopf und dem wenigstens einen Hintergriffelement verklemmt wird, was die gewünschte stabile und lagegenaue Positionierung der beiden Werkzeugteile relativ zueinander begünstigt.

Gemäß einer weiteren besonders bevorzugten Ausgestaltung der vorliegenden Erfindungsidee wird vorgeschlagen, dass das Gewinde und/oder die Schraubmutter so ausgebildet ist oder sind, dass das wenigstens eine Hintergriffelement in der Ausbrechwerkzeug-Verriegelungsstellung gegenüber dem wenigstens einen, dem Hintergriffelement zugeordneten Durchführschlitz verdreht ist und somit das zugeordnete Werkzeugteil im Bereich der Schraubausnehmung funktionssicher unter- und/oder hintergriffen wird. Insbesondere ist oder sind das Gewinde und/oder die Schraubmutter dabei so ausgebildet, dass mittels der Gewindeschraube lediglich eine definierte Schraubendrehung durchführbar ist, bis die der Ausbrechwerkzeug-Verriegelungsstellung entsprechende Einschraubposition erreicht ist.

Mit einem derartigen Aufbau wird auf einfache Weise sichergestellt, dass die Gewindeschraube nicht soweit eingedreht wird, dass das wenigstens eine Hintergriffelement (wieder) in einer Flucht mit dem Durchführschlitz liegt und damit gegebenenfalls die eigentlich gewünschte Blockade der Relativverlagerung in unerwünschter Weise aufgehoben wird.

Als weitere alternatives oder zusätzliches Sicherheitsmerkmal, das sicherstellt, dass sich die Gewindeschraube in einer gewünschten Verriegelungsposition bzw. Hintergriffsposition befindet, kann vorgesehen sein, dass an einem Schraubenkopf der Gewindeschraube eine Hintergriffelement-Positioniermarkierung vorgesehen ist, die in Schraubachsenlängsrichtung oberhalb des wenigstens einen Hintergriffelementes angeordnet ist und die die jeweilige Position des wenigstens einen Hintergriffelementes anzeigt, und zwar insbesondere im Hinblick auf den wenigsten einen Durchführschlitz anzeigt.

Alternativ oder zusätzlich dazu kann gemäß einer weiteren besonders bevorzugten erfindungsgemäßen Ausführungsvariante vorgesehen sein, dass die Schraubmutter, die bevorzugt durch ein in eine werkzeugteilseitige Schraubmutter einsetzbares Bauteil gebildet ist, eine Positioniermarkierung aufweist, die in Schraubachsenlängsrichtung gesehen einem Durchführschlitz zugeordnet ist. Dadurch wird auf einfache Weise sichergestellt, dass der Gewindebereich der Schraubmutter exakt so ausgerichtet ist, dass der Gewindebereich der Gewindeschraube in genau der gewünschten Weise in das Gewinde der Schraubmutter eingreift. Dadurch kann auf einfache Weise sichergestellt werden, dass die Gewindeschraube in der gewünschten Einschraubposition bzw. in der Ausbrechwerkzeug-Verriegelungsstellung mit dem wenigstens einen Hintergriffelement gegenüber dem diesen zugeordneten Durchführschlitz verdreht ist und somit das zugeordnete Werkzeugteil im Bereich der Schraubausnehmung funktionssicher unter- und/oder hintergriffen ist. Die Schraubmutter kann dabei, wie zuvor ausgeführt, durch ein separates Bauteil ausgebildet sein oder aber auch durch ein in das zugeordnete Werkzeugteil bzw. in eine werkzeugteilseitige Schraubmutterausnehmung eingeschnittenes Gewinde ausgebildet sein.

Für den Fall, dass die Schraubmutter durch ein in eine werkzeugteilseitige Schraubmutterausnehmung einsetzbares Bauteil gebildet ist, kann des Weiteren vorgesehen sein, dass die Positioniermarkierung form- und konturangepasst in eine in Schraubachsenlängsrichtung gesehen in Verlängerung des Durchführschlitzes ausgebildete Positioniermarkierung-Ausnehmung eingesetzt und darin aufgenommen ist. Mit einer derartigen Ausgestaltung wird auf besonders einfache und funktionssichere Weise sichergestellt, dass die Schraubmutter stets in der gewünschten Weise in der zugeordneten Schraubmutterausnehmung aufgenommen ist, wodurch sich die zuvor genannten Vorteile in Verbindung mit der funktionssicheren Verriegelung bzw. Blockade der Relativverlagerung ergeben, das heißt auf einfache Weise sichergestellt wird, dass die Gewindeschraube stets in der gewünschten Weise in die die Hintergriffsverbindung ausbildende Stellung verdreht ist.

Gemäß einer weiteren besonders bevorzugten Ausgestaltung kann vorgesehen sein, dass die Gewindeschraube einen Schraubenkopf aufweist, in dem eine mittige und zentrale Werkzeugausnehmung ausgebildet ist, wobei die Werkzeugausnehmung so ausgebildet ist, dass in diese ein schraubenschaftseitig ausgebildeter Werkzeugansatz form- und konturangepasst einsetzbar ist. In diesem Zusammenhang kann des Weiteren bevorzugt vorgesehen werden, dass der schraubenschaftseitige Werkzeugansatz in einem sich an einen endseitigen Gewindebereich in Richtung zum Schraubenkopf hin anschließenden Bereich des Schraubenschaftes ausgebildet ist. Ein derartiger Werkzeugansatz kann zum Beispiel durch einen Mehrkant, zum Beispiel durch einen Sechskant oder dergleichen, ausgebildet sein. Mit einer derartigen Ausgestaltung kann somit eine Gewindeschraube gleicher Bauart als Werkzeug verwendet werden, um eine Gewindeschraube funktionssicher einzuschrauben. Da bei den Ausbrechwerkzeugen regelmäßig ohnehin mehrere derartiger Schrauben zum Einsatz kommen, um die gewünschte Relativverlagerung der beiden Werkzeugteile zueinander zu vermeiden, wird somit hier auf einfache Weise das Vorhalten eines separaten Werkzeugs vermieden und kann die gewünschte Schraubverbindung einfach und funktionssicher hergestellt werden.

Es versteht sich, dass wenigstens eines der Werkzeugteile, insbesondere das Werkzeug-Unterteil, wenigstens einen Durchbruch aufweisen kann, in den ein entsprechend zugeordnetes Abfallteil eines in das Ausbrechwerkzeug eingebrachten Bogens, bei einer aufeinander zugerichteten Verlagerung wenigstens eines der beiden Werkzeugteile, mittels wenigstens eines an den jeweils anderen Werkzeugteil, insbesondere an dem Werkzeug-Oberteil, angeordneten Ausbrechelementes, eindrückbar ist.

Des Weiteren kann zwischen den beiden Werkzeugteilen ferner wenigstens ein elastisch komprimierbares Fixierelement, zum Beispiel ein Schaumstoffteil wie eingangs beschrieben, angeordnet sein, insbesondere am Werkzeug-Oberteil angeordnet sein, das im funktionsgemäßen Betrieb des Ausbrechwerkzeugs einen in den Zwischenraum eingebrachten Bogen fixiert und/oder das in der Ausbrechwerkzeug-Transportsstellung zwischen den beiden Werkzeugteilen vorgespannt ist.

Ein Sicherungselement zur lagegenauen Positionierung von zwei Werkzeugteilen eines Ausbrechwerkzeugs, bei dem das Sicherungselement durch eine Schraubmutter und weiter durch eine Gewindeschraube gebildet ist, wobei an der Gewindeschraube wenigstens ein erhabenes Hintergriffelement vorgesehen ist, dient in der Verwendung mit dem vorstehend beschriebenen erfindungsgemäßen Ausbrechwerkzeug zur funktionssicheren lagegenauen Positionierung der beiden Werkzeugteile relativ zueinander, insbesondere in Verbindung mit einem Transport des Ausbrechwerkzeugs. Ferner wird dadurch auf einfache Weise eine gewünschte Zentrierung der Werkzeugteile erreicht, dass heißt dass das Werkzeug-Oberteil und das Werkzeug-Unterteil bereits während des Transportes in einer gewünschten Relativposition zueinander gehalten werden, so dass das Ausbrechwerkzeug im mittels der Sicherheitselemente gehaltenen Zustand einfachst in der Maschine positioniert werden kann und die Maschine nach Lösen der Sicherheitselemente schnell und ohne aufwendiges Nachjustieren der Werkzeugteile einsatzbereit ist. Die sich weiter ergebenden Vorteile wurden bereits zuvor in Verbindung mit der Würdigung des erfindungsgemäßen Ausbrechwerkzeugs ausführlich dargestellt. Insofern wird diesbezüglich auf die zuvor gemachten Ausführungen verwiesen.

Die Erfindung wird nachfolgend anhand einer Zeichnung näher erläutert.

Es zeigen:
- Fig. 1: schematisch eine Prinzipdarstellung einer beispielhaften erfindungsgemäßen Ausbrechwerkzeug-Ausführungsform,
- Fig. 2: schematisch und perspektivisch eine beispielhafte, bevorzugte Ausführungsform einer erfindungsgemäßen Gewindeschraube,
- Fig. 3: schematisch und beispielhaft eine perspektivische, bevorzugte Ausführungsform einer erfindungsgemäßen Schraubmutter,
- Fig. 4: schematisch und beispielhafte eine perspektivische Prinzipskizze mit einer im Werkzeug-Unterteil ausgebildeter schlüssellochartiger Schraubausnehmung, der im Werkzeug-Oberteil eine mit einer Positionsmarkierung versehene Schraubmutter zugeordnet ist,
- Fig. 5: eine schematische Darstellung entsprechend Fig. 4, bei der nunmehr die Gewindeschraube durch die schlüssellochartige Schraubausnehmung hindurchgeführt und in die Schraubmutter eingeschraubt ist, und
- Fig. 6: schematisch eine perspektivische Unteransicht des Aufbaus gemäß Fig. 5 mit einer im Werkzeug-Oberteil ausgebildeten Positioniermarkierung-Ausnehmung.

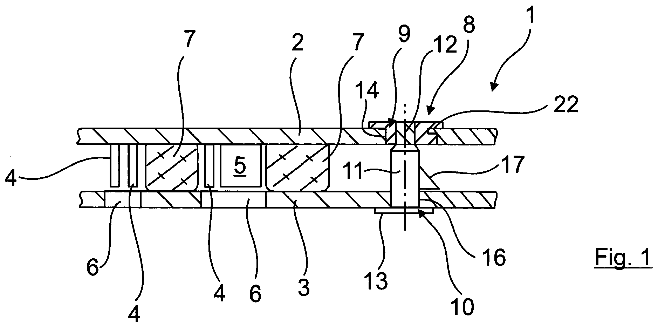

In der Fig. 1 ist schematisch und beispielhaft eine Ausführungsform eines erfindungsgemäßen Ausbrechwerkzeugs in einer Prinzip- und Übersichtsdarstellung gezeigt. Konkret weist das Ausbrechwerkzeug 1, das hier im Querschnitt dargestellt ist, ein ein- oder mehrteilig ausgebildetes Werkzeug-Oberteil 2 und ein ein- oder mehrteilig ausgebildetes Werkzeug-Unterteil 3 auf. Am Werkzeug-Oberteil 2 sind nach unten in Richtung Werkzeug-Unterteil 3 weisende Ausbrechelemente in Form von hier beispielhaft Ausbrechstiften 4 und einer Ausbrechplatte 5 angeordnet. Diesen Ausbrechstiften 4 und der Ausbrechplatte 5 sind im, in der Fig. 1 gezeigten Beispielfall, Durchbrüche 6 zugeordnet, durch die in nicht dargestellter Weise ein entsprechend zugeordnetes Abfallteil eines in das Ausbrechwerkzeug 1 eingebrachten Bogens bei einer aufeinander zugerichteten Verlagerung von Werkzeug-Oberteil 2 und Werkzeug-Unterteil 3 durch- bzw. eindrückbar ist, um die Abfallteile von dem Bogen zu trennen. Die Form der Durchbrüche 6 entspricht dabei der Form der abzutrennenden Abfallteile.

Weiterhin sind hier beispielhaft am Werkzeug-Oberteil 2 Schaumstoffteile 7 als elastisch komprimierbare Fixierelemente angeordnet, die den hier nicht dargestellten Bogen bei einem Ausbrechvorgang fixieren können. Diese Schaumstoffteile 7 wirken hier mit einem Sicherungselement 8 zusammen, das durch eine, in eine Schraubmutterausnehmung 14 form- und konturangepasst eingesetzte Schraubmutter 9 mit einem Innengewinde 15 und weiter durch eine Gewindeschraube 10 gebildet ist. Die Gewindeschraube 10 ist mit einem Schraubenschaft 110 durch eine Schraubausnehmung 16 in dem Werkzeug-Unterteil 3 hindurchgeführt und mit einem endseitig an dem Schraubenschaft 11 ausgebildeten Gewinde 12 (Außengewinde) in die Schraubmutter 9 eingeschraubt.

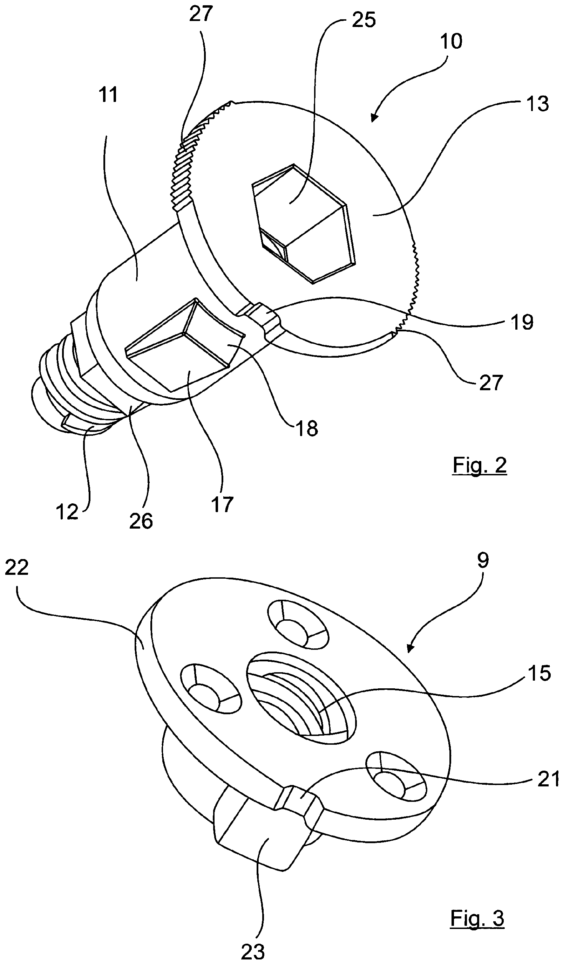

An das Gewinde 12 des Schraubenschaftes 11 der Gewindeschraube 10 schließt sich in Richtung zu einem Schraubenkopf 13 hin eine keilförmige Rampe 17 als Hintergriffelement an, was auch sehr gut aus der eine vergrößerte Detaildarstellung der Gewindeschraube 10 zeigenden Fig. 2 ersichtlich ist. Diese ein Hintergriffelement ausbildende Rampe 17 unter- bzw. hintergreift in der in der Fig. 1 gezeigten Verriegelungsposition das Werkzeug-Unterteil 3 im Bereich der Schraubausnehmung 16 und verhindert dadurch insbesondere bei einem Transport bzw. bei einer Lagerung des Ausbrechwerkzeugs eine aufeinander zugerichtete Verlagerung von Werkzeug-Oberteil 2 und Werkzeug-Unterteil 3.

In der in der Fig. 1 gezeigten Verriegelungsstellung des Ausbrechwerkzeugs 1 werden somit das Werkzeug-Oberteil 2 und das Werkzeug-Unterteil 3 in einem vordefinierten Abstand zueinander gehalten.

Bei hergestellter Hintergriffsverbindung stützt sich, wie dies in der Fig. 1 gezeigt ist, die Rampe 17 mit einer Rampenstirnseite 18 bevorzugt an der Innenseite des Werkzeug-Unterteils 3 ab und liegt gleichzeitig der Schraubenkopf 13 an der Außenseite des Werkzeug-Unterteils 3 an, sodass ein entsprechend zugeordneter Ausnehmungsrandbereich der Schraubausnehmung 16 mehr oder weniger zwischen dem Schraubenkopf 13 und der Rampe 17 bzw. der Rampenstirnseite 18 gehalten und/oder verklemmt ist.

Mit einem solchermaßen hinsichtlich der Relativverlagerung verriegelten bzw. blockierten Ausbrechwerkzeug 1 wird auf einfache Weise sichergestellt, dass selbst bei einer entsprechenden Kraftbeaufschlagung von dem Werkzeug-Unterteil 3 bzw. dem Werkzeug-Oberteil 2 keine aufeinander zugerichtete Verlagerung dieser beiden Bauteile erfolgt und somit auf einfache Weise sichergestellt wird, dass die Ausbrechstifte 4 bzw. die Ausbrechplatte 5 nicht auf der Rückseite des Werkzeug-Unterteils 3 vorstehen und damit beschädigt werden können.

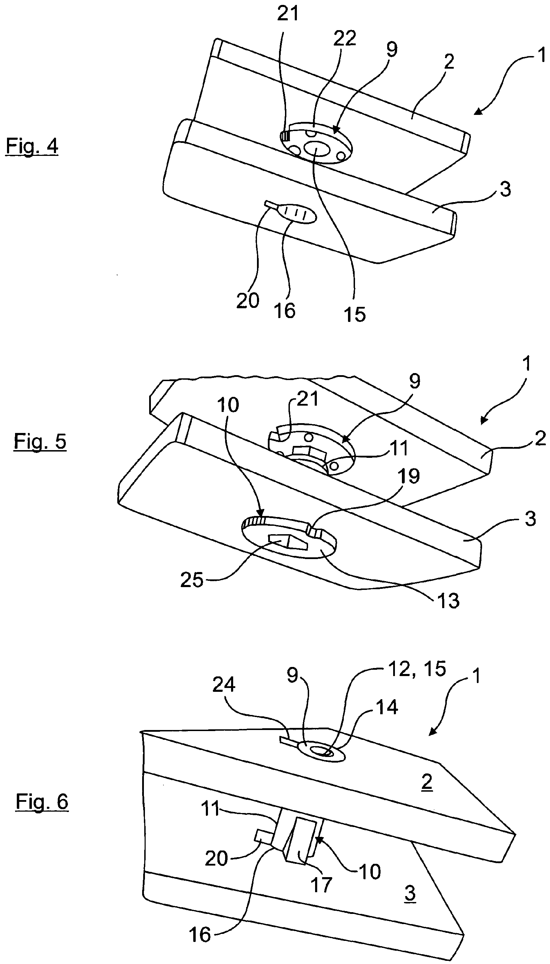

Wie dies insbesondere der Fig. 4 entnommen werden kann, ist die Schraubausnehmung 16 im Werkzeug-Unterteil 3 im Wesentlichen als zylindrische Ausnehmung ausgebildet, die den zylindrischen Schraubenschaft 11 im Wesentlichen form- und konturangepasst bzw. mit einem definierten Spaltmaß umschließt. Um das Durchführen des Schraubenschaftes 11 mitsamt der daran als Hintergriffelement angeordneten Rampe 17 zu ermöglichen, ist im Bereich der Schraubausnehmung 16 weiter ein Durchführschlitz 20 angeordnet, der hinsichtlich seiner Länge und Breite im Wesentlichen der Rampenform der Rampe 17 entspricht, sodass die Schraubausnehmung 16 eine insgesamt in etwa schlüssellochartige Form aufweist.

Wie dies insbesondere der Fig. 2 zu entnehmen ist, weist der Schraubenkopf 13 eine Positionierkerbe 19 als Hintergriffelement-Positioniermarkierung auf, die in Schraubachsenlängsrichtung oberhalb der Rampe 17 angeordnet ist und die somit die jeweilige Position der Rampe 17 relativ zum Durchführschlitz 20 anzeigt. Damit kann auf einfache Weise sichergestellt werden, dass die Gewindeschraube 10 im eingeschraubten Zustand mit der Rampe 17 nicht aus Versehen wieder in einer Flucht mit dem Durchführschlitz 20 liegt und damit gegebenenfalls eine Relativverlagerung von Werkzeug-Oberteil 2 und Werkzeug-Unterteil 3 unabsichtlich freigegeben wird.

Als diesbezüglich weitere oder aber auch alternative Sicherheitsmaßnahme kann zudem vorgesehen werden, dass die Schraubmutter 9 ebenfalls eine Positionierkerbe 21 aufweist, und zwar zum Beispiel an einem Auflageflansch 22 der Schraubmutter 9, wobei diese Positionierkerbe 21 in Schraubachsenlängsrichtung gesehen dem Durchführschlitz 20 im Werkzeug-Unterteil 3 zugeordnet ist. Dadurch wird auf einfache Weise sichergestellt, dass das Innengewinde 15 der Schraubmutter 9 exakt so ausgerichtet ist, dass das Außengewinde 12 der Gewindeschraube 10 in genau der gewünschten Weise in dieses Innengewinde 15 der Schraubmutter 9 eingreift. Dadurch kann auf einfache Weise sichergestellt werden, dass die Gewindeschraube in der gewünschten Einschraubposition bzw. in der Ausbrechwerkzeug-Verriegelungsstellung mit der Rampe 17 gegenüber dem Durchführschlitz 20 verdreht ist und somit das Werkzeug-Unterteil 3 im Bereich der Schraubausnehmung 16 funktionssicher unter- und/oder hintergriffen ist. Um sicherzustellen, dass die Schraubmutter 9 stets in der gewünschten Weise in der zugordneten Schraubmutterausnehmung 14 aufgenommen ist, kann alternativ oder zusätzlich zu den vorherigen Maßnahmen vorgesehen sein, dass der Positionierkerbe 21 eine Positioniernase 23 zugeordnet ist, die form- und konturangepasst in eine in Schraubachsenlängsrichtung gesehen in Verlängerung des Durchführschlitzes 20 ausgebildete Positioniermarkierung-Ausnehmung 24 eingesetzt und darin aufgenommen ist. Wie dies insbesondere aus der Fig. 6 ersichtlich ist, schließt sich die Positioniermarkierung-Ausnehmung 24 im Wesentlichen analog dem Durchführschlitz 20 an eine zylindrische Schraubmutterausnehmung 14 an.

Die Schraubmutter 9 selbst kann dabei zum Beispiel durch Klemm- oder Reibschluss in der Schraubmutterausnehmung 14 gehalten sein, wie dies lediglich äußerst schematisch und beispielhaft in der Fig. 1 dargestellt ist, bei der der Auflageflansch 22 der Schraubmutter 9 auf der Außenseite des Werkzeug-Oberteils 2 anliegt. Alternativ dazu kann aber auch, wie es in den Fig. 3 bis 6 dargestellt ist, die Schraubmutter 9 mittels des Auflageflansches 22 an der Innenseite des Werkzeug-Oberteils 2 anliegen und dort mittels mehrer, hier beispielsweise dreier, nicht im Detail gezeigter Schraubverbindungen festgelegt sein.

Wie dies den Fig. 4 bis 6 entnommen werden kann, wird somit zuerst die Schraubmutter 9 im Werkzeug-Oberteil 2 lage- und positionsgenau festgelegt, sodass die Positionierkerbe 21 der Schraubmutter 9 in einer Flucht mit dem Durchführschlitz 20 der Schraubausnehmung 16 im Werkzeug-Unterteil 3 liegt. Anschließend wird dann die Gewindeschraube 10 durch die Schraubausnehmung 16 mitsamt Durchführschlitz 20 hindurchgeführt und das Außengewinde 12 der Gewindeschraube 10 in das Innengewinde 15 der Schraubmutter 9 eingeschraubt. Diese Gewindepaarung kann dabei so ausgebildet sein, dass mittels der Gewindeschraube 10 lediglich eine definierte, begrenzte Schraubendrehung durchführbar ist, bis die der gewünschten Ausbrechwerkzeug-Verriegelungsstellung entsprechende Einschraubposition erreicht ist, bei der die Rampe 17 gegenüber dem Durchführschlitz 20 verdreht ist, zum Beispiel, wie in der Fig. 5 dargestellt, um 90 Grad verdreht ist. Die Positionierkerbe 19 am Schraubenkopf 13 zeigt dem Werker dabei an, dass die Rampe 17 gegenüber dem Durchführschlitz 20 verdreht ist.

Wie dies insbesondere der Fig. 2 weiter entnommen werden kann, weist die Gewindeschraube 10 vom Schraubenkopf 13 ausgehend eine mittige und zentrale Werkzeugausnehmung 25 auf, die so ausgebildet ist, dass in diese ein schraubenschaftseitig ausgebildeter Werkzeugansatz 26 einer identisch aufgebauten Gewindeschraube 10 form- und konturangepasst eingebracht werden kann, sodass somit eine Gewindeschraube 10 gleicher Bauart als Werkzeug verwendet werden kann, um die jeweilige Gewindeschraube 10 funktionssicher einzuschrauben. Wie in der Fig. 2 schematisch dargestellt, kann der schraubenschaftseitige Werkzeugansatz 26, der zum Beispiel als Mehrkant, zum Beispiel als Sechskant oder dergleichen, ausgebildet ist, in einem sich an den endseitigen Gewindebereich anschließenden mittleren Schraubenschaftbereich angeordnet sein.

Alternativ oder zusätzlich kann, wie in der Fig. 2 lediglich äußerst schematisch gezeigt, am Schraubenkopf 13 auch eine Rändelung 27 angeordnet sein, die das Eindrehen der Gewindeschraube 10 erleichtert.

Sowohl die Gewindeschraube 10 als auch die Schraubmutter 9 können zum Beispiel aus einem Kunststoffmaterial hergestellt sein. Auch andere Materialien und Werkstoffe sind jederzeit denkbar. Das Werkzeug-Oberteil 2 und das Werkzeug-Unterteil 3 können zum Beispiel aus einem Holz-Werkstoff hergestellt sein. Auch hier sind wiederum selbstverständlich jedwede andere geeigneten Werkstoffe und Materialien alternativ oder zusätzlich einsetzbar.

**Bezugszeichenliste**

| | | | |
|---|---|---|---|
| 1 | Ausbrechwerkzeug | 25 | Werkzeugausnehmung |
| 2 | Werkzeug-Oberteil | 26 | Werkzeugansatz |
| 3 | Werkzeug-Unterteil | 27 | Rändelung |
| 4 | Ausbrechstifte | | |
| 5 | Ausbrechplatte | | |
| 6 | Durchbrüche | | |
| 7 | Schaumstoffteile | | |
| 8 | Sicherungselement | | |
| 9 | Schraubmutter | | |
| 10 | Gewindeschraube | | |
| 11 | Schraubenschaft | | |
| 12 | Gewinde | | |
| 13 | Schraubenkopf | | |
| 14 | Schraubmutterausnehmung | | |
| 15 | Innengewinde | | |
| 16 | Schraubausnehmung | | |
| 17 | Rampe | | |
| 18 | Rampenstirnseite | | |
| 19 | Positionierkerbe | | |
| 20 | Druchführschlitz | | |
| 21 | Positionierkerbe | | |
| 22 | Auflageflansch | | |
| 23 | Positioniernase | | |
| 24 | Positioniermarkierung-Ausnehmung | | |

## Patentansprüche

1. Ausbrechwerkzeug (1) zum Ausbrechen von Stanzabfällen bei der Herstellung von Zuschnitten aus einem Bogen, mit einem ein- oder mehrteilig ausgebildeten Werkzeug-Oberteil (2) und einem ein- oder mehrteilig ausgebildeten Werkzeug-Unterteil (3), die zwei relativ zueinander verlagerbare Werkzeugteile (2, 3) ausbilden, wobei wenigstens eines der Werkzeugteile (2, 3), insbesondere das Werkzeug-Unterteil (3), wenigstens einen Durchbruch (6) aufweist, dem am anderen Werkzeugteil (2) wenigstens ein Ausbrechelement (4, 5) zugeordnet ist, **dadurch gekennzeichnet, dass** für eine lagegenaue Positionierung der beiden Werkzeugteile (2, 3) relativ zueinander wenigstens ein Sicherungselement (8) vorgesehen ist, das durch eine in einem Werkzeugteil (8) ausgebildete oder angeordnete Schraubmutter (9) und weiter durch eine Gewindeschraube (10) gebildet ist, wobei die Gewindeschraube (10) in einer Ausbrechwerkzeug-Verriegelungsstellung mit einem Schraubenschaft (11) durch eine Schraubausnehmung (16) in dem anderen Werkzeugteil (3) hindurchgeführt und mit einem sich über einen definierten Schraubenschaftbereich erstreckenden Gewinde (12) in die Schraubmutter (9) eingeschraubt ist, und dass an der Gewindeschraube (10) wenigstens ein Element (17) vorgesehen ist, das in der Ausbrechwerkzeug-Verriegelungsstellung eine aufeinander zu gerichtete Relativverlagerung der beiden Werkzeugteile (2, 3) verhindert und/oder diese in einem vordefinierten Abstand zueinander hält.

2. Ausbrechwerkzeug nach Anspruch 1, **dadurch gekennzeichnet, dass** das wenigstens eine Element (17) durch wenigstens ein an dem Schraubenschaft (11) der Gewindeschraube (10) ausgebildetes oder angeordnetes, erhabenes Hintergriffelement gebildet ist, das das zugeordnete Werkzeugteil (3), insbesondere im Bereich der Schraubausnehmung (16), in der Ausbrechwerkzeug-Verriegelungsstellung hinter- und/oder untergreift.

3. Ausbrechwerkzeug nach Anspruch 2, **dadurch gekennzeichnet, dass** das wenigstens eine Hintergriffelement (17) an einem gewindefreien Schraubenschaftteilbereich des Schraubenschaftes (11) vorgesehen ist, an den sich zum Schraubenschaftende hin das Gewinde (12) mittelbar oder unmittelbar anschließt.

4. Ausbrechwerkzeug nach Anspruch 2 oder 3, **dadurch gekennzeichnet, dass** das wenigstens eine Hintergriffelement (17) keilförmig ausgebildet ist und eine in Richtung zur Hintergriffsverbindung zu ansteigende Rampe aufweist, wobei bevorzugt vorgesehen ist, dass diese Rampe in der Ausbrechwerkzeug-Verriegelungsstellung mit einer Rampenstirnseite (18) an dem zugeordneten Werkzeugteil (3) anliegt oder einen definierten Abstand zu dem zugeordneten Werkzeugteil (3) aufweist.

5. Ausbrechwerkzeug nach einem der Ansprüche 2 bis 4, **dadurch gekennzeichnet, dass** am Schraubenschaft (11) ein einziges Hintergriffelement (17) vorgesehen ist oder mehrere voneinander in Schraubenschaft-Umfangsrichtung voneinander beabstandete Hintergriffelemente vorgesehen sind.

6. Ausbrechwerkzeug nach einem der vorhergehenden Ansprüche, **dadurch gekennzeichnet, dass** die Schraubausnehmung (16) im Werkzeugteil (3) als zylindrische Ausnehmung ausgebildet ist, die den zylindrischen Schraubenschaft (11) in der Ausbrechwerkzeug-Verriegelungsstellung form- und konturangepasst mit einem definierten Spaltmaß umschließt, wobei die zylindrische Ausnehmung eine der Anzahl der Hintergriffelemente (17) entsprechende Anzahl von ausnehmungsrandseitigen Durchführschlitzen (20) aufweist, durch die beim Durchführen des Schraubenschaftes (11) durch die Schraubausnehmung (16) das wenigstens eine Hintergriffelement (17) durchgeführt wird.

7. Ausbrechwerkzeug nach Anspruch 5 und 6, **dadurch gekennzeichnet, dass** am Schraubenschaft (11) ein einziges Hintergriffelement (17) vorgesehen ist, dem im Bereich der Schraubausnehmung (16) ein Durchführschlitz (20) dergestalt zugeordnet ist, dass die Schraubausnehmung (16) eine insgesamt schlüssellochartige Form aufweist.

8. Ausbrechwerkzeug nach einem der Ansprüche 2 bis 7, **dadurch gekennzeichnet, dass** die Gewindeschraube (10) einen Schraubenkopf (13) aufweist, der in der Ausbrechwerkzeug-Verriegelungsstellung in einer Anlageverbindung an dem Werkzeugteil (3) anliegt und/oder der einen zugeordneten Ausnehmungsrandbereich der Schraubausnehmung (16) zwischen sich und dem wenigstens einen Hintergriffelement (17) aufnimmt, insbesondere zwischen sich und dem wenigstens einen Hintergriffelement (17) verklemmt.

9. Ausbrechwerkzeug nach einem der Ansprüche 6 bis 8, **dadurch gekennzeichnet, dass** das Gewinde (12) der Gewindeschraube (10) und/oder die Schraubmutter (9) so ausgebildet ist oder sind, dass das wenigstens eine Hintergriffelement (17) in der Ausbrechwerkzeug-Verriegelungsstellung gegenüber dem wenigstens einen, dem Hintergriffelement (17) zugeordneten Durchführschlitz (20) verdreht ist und somit das zugeordnete Werkzeugteil (3) im Bereich der Schraubausnehmung (16) unter- und/oder hintergreift.

10. Ausbrechwerkzeug nach Anspruch 9, **dadurch gekennzeichnet, dass** das Gewinde (12) der Gewindeschraube (10) und/oder die Schraubmutter (9) so ausgebildet ist oder sind, dass mittels der Gewindeschraube (10) lediglich eine solche definierte Schraubendrehung durchführbar ist, bis die der Ausbrechwerkzeug-Verriegelungsstellung entsprechende Einschraubposition erreicht ist.

11. Ausbrechwerkzeug nach einem der vorhergehenden Ansprüche, **dadurch gekennzeichnet, dass** an einem Schraubenkopf (13) der Gewindeschraube (10) eine Hintergriffelement-Positioniermarkierung (19) vorgesehen ist, die in Schraubachsenlängsrichtung oberhalb des wenigstens einen Hintergriffelementes (17) angeordnet ist und die die jeweilige Position des wenigstens eines Hintergriffelementes (17) anzeigt, insbesondere im Hinblick auf den wenigstens einen Durchführschlitz (20) anzeigt.

12. Ausbrechwerkzeug nach einem der Ansprüche 6 bis 12, **dadurch gekennzeichnet, dass** die Schraubmutter (9), die bevorzugt durch ein in eine werkzeugteilseitige Schraubmutterausnehmung (14) einsetzbares Bauteil gebildet ist, eine Positioniermarkierung (21, 23) aufweist, die in Schraubachsenlängsrichtung gesehen einem Durchführschlitz (20) zugeordnet ist und/oder die form- und konturangepasst in eine in Schraubachsenlängsrichtung gesehen in Verlängerung des Durchführschlitzes (20) ausgebildete Positioniermarkierung-Ausnehmung (24) in dem die Schraubmutter (9) aufnehmenden Werkzeugteil (2) eingesetzt und aufgenommen ist.

13. Ausbrechwerkzeug nach einem der vorhergehenden Ansprüche **dadurch gekennzeichnet, dass** die Gewindeschraube (10) einen Schraubenkopf (13) aufweist, in dem eine mittige und zentrale Werkzeugausnehmung (25) ausgebildet ist, wobei die Werkzeugausnehmung (25) so ausgebildet ist, dass in diese ein schraubenschaftseitig ausgebildeter Werkzeugansatz (26) form- und konturangepasst einsetzbar ist, wobei bevorzugt vorgesehen ist, dass der schraubenschaftseitige Werkzeugansatz (26) in einem sich an einen endseitigen Gewindebereich in Richtung zum Schraubenkopf (13) hin anschließenden Bereich des Schraubenschaftes (11) ausgebildet ist.

## Claims

1. Break-out tool (1) for breaking punching waste out of a sheet during the production of blanks, having a one- or multipart upper tool part (2) and a one- or multipart lower tool part (3), which form two tool parts (2, 3) that are movable relative to one another, wherein at least one of the tool parts (2, 3), in particular the lower tool part (3), has at least one aperture (6) to which at least one break-out element (4, 5) on the other tool part (2) is assigned, **characterized in that** in order to precisely position the two tool parts (2, 3) relative to one another, at least one securing element (8) is provided, which is formed by a nut (9) formed or arranged in one tool part (8) and also by a threaded bolt (10), wherein, in a break-out tool locking position, the threaded bolt (10) is passed with a bolt shank (11) through a bolt cutout (16) in the other tool part (3) and is screwed into the nut (9) with a thread (12) extending along a defined bolt shank region, and **in that**, on the threaded bolt (10), there is provided at least one element (17) that prevents a relative movement of the two tool parts (2, 3) towards one another and/or keeps them at a predefined spacing in the break-out tool locking position.

2. Break-out tool according to Claim 1, **characterized in that** the at least one element (17) is formed by at least one raised rear-engagement element formed or arranged on the bolt shank (11) of the threaded bolt (10), said rear-engagement element engaging behind and/or under the associated tool part (3), in particular in the region of the bolt cutout (16), in the break-out tool locking position.

3. Break-out tool according to Claim 2, **characterized in that** the at least one rear-engagement element (17) is provided on a thread-free bolt shank subregion of the bolt shank (11), which is indirectly or directly adjoined towards the bolt shank end by the thread (12).

4. Break-out tool according to Claim 2 or 3, **characterized in that** the at least one rear-engagement element (17) is formed in a wedge-shaped manner and has a ramp that rises in the direction of the rear-engagement connection, wherein provision is preferably made for this ramp to bear against the associated tool part (3) with a ramp front side (18) or to be at a defined spacing from the associated tool part (3) in the break-out tool locking position.

5. Break-out tool according to one of Claims 2 to 4, **characterized in that** a single rear-engagement element (17) is provided on the bolt shank (11) or a plurality of rear-engagement elements that are spaced apart from one another from one another in the bolt shank circumferential direction are provided.

6. Break-out tool according to one of the preceding claims, **characterized in that** the bolt cutout (16) in the tool part (3) is in the form of a cylindrical cutout, which surrounds the cylindrical bolt shank (11) in a shape- and contour-adapted manner with a defined gap size in the break-out tool locking position, wherein the cylindrical cutout has a number of cutout-peripheral passage slots (20), which corresponds to the number of rear-engagement elements (17) and through which the at least one rear-engagement element (17) is passed when the bolt shank (11) is passed through the bolt cutout (16).

7. Break-out tool according to Claims 5 and 6, **characterized in that** a single rear-engagement element (17) is provided on the bolt shank (11), said rear-engagement element (17) being assigned a passage slot (20) in the region of the bolt cutout (16) such that the bolt cutout (16) has a keyhole-like shape overall.

8. Break-out tool according to one of Claims 2 to 7, **characterized in that** the threaded bolt (10) has a bolt head (13), which bears against the tool part (3) in a bearing connection in the break-out tool locking position and/or which receives an associated cutout peripheral region of the bolt cutout (16) between itself and the at least one rear-engagement element (17), in particular clamps it between itself and the at least one rear-engagement element (17).

9. Break-out tool according to one of Claims 6 to 8, **characterized in that** the thread (12) of the threaded bolt (10) and/or the nut (9) is or are configured such that the at least one rear-engagement element (17) is twisted with respect to the at least one passage slot (20), assigned to the rear-engagement element (17), in the break-out tool locking position and thus engages behind and/or under the associated tool part (3) in the region of the bolt cutout (16).

10. Break-out tool according to Claim 9, **characterized in that** the thread (12) of the threaded bolt (10) and/or the nut (9) is or are configured such that, by means of the threaded bolt (10), only one such defined bolt rotation is able to be carried out until the screw-in position corresponding to the break-out tool locking position is reached.

11. Break-out tool according to one of the preceding claims, **characterized in that** a rear-engagement element positioning marking (19) is provided on a bolt head (13) of the threaded bolt (10), said rear-engagement element positioning marking (19) being arranged above the at least one rear-engagement element (17) in the bolt axis longitudinal direction and indicating the particular position of the at least one rear-engagement element (17), in particular indicates it with respect to the at least one passage slot (20).

12. Break-out tool according to one of Claims 6 to 12, **characterized in that** the nut (9), which is formed preferably by a component that is insertable into a tool-part-side nut cutout (14), has a positioning marking (21, 23), which, as seen in the bolt axis longitudinal direction, is assigned to a passage slot (20) and/or is inserted in a shape- and contour-adapted manner into a positioning-marking cutout (24), formed in continuation of the passage slot (20) as seen in the bolt axis longitudinal direction, in the tool part (2) receiving the nut (9), and is received therein.

13. Break-out tool according to one of the preceding claims, **characterized in that** the threaded bolt (10) has a bolt head (13), in which a middle or central tool cutout (25) is formed, wherein the tool cutout (25) is configured such that a tool attachment (26) formed on the bolt-shank side is insertable into the latter in a shape- and contour-adapted manner, wherein provision is preferably made for the bolt-shank-side tool attachment (26) to be formed in a region of the bolt shank (11) that adjoins an end-side thread region in the direction of the bolt head (13).

## Revendications

1. Outil d'éjection (1) pour l'éjection de déchets de presse à découper lors de la production de découpes à partir d'une feuille, comprenant une partie supérieure d'outil (2) réalisée en une ou plusieurs parties et une partie inférieure d'outil (3) réalisée en une ou plusieurs parties, lesquelles forment deux parties d'outil (2, 3) déplaçables l'une par rapport à l'autre, au moins l'une des parties d'outil (2, 3), en particulier la partie inférieure d'outil (3), comprenant au moins un trou débouchant (6) auquel est associé au moins un élément d'éjection (4, 5) sur l'autre partie d'outil (2), **caractérisé en ce qu'**au moins un élément de fixation (8) est prévu pour le positionnement en position précise des deux parties d'outil (2, 3) l'une par rapport à l'autre, lequel élément de fixation est formé par un écrou (9) réalisé ou disposé dans une partie d'outil (8) et en outre par une vis filetée (10), la vis filetée (10) étant, dans une position de verrouillage d'outil d'éjection, guidée à travers un évidement de vis (16) dans l'autre partie d'outil (3) par une tige de vis (11) et étant vissée dans l'écrou (9) par un filetage (12) s'étendant sur une région définie de la tige de vis, et **en ce qu'**au moins un élément (17) est prévu sur la vis filetée (10), lequel, dans la position de verrouillage d'outil d'éjection, empêche un déplacement relatif des deux parties d'outil (2, 3) l'une vers l'autre et/ou maintient celles-ci à une distance prédéfinie.

2. Outil d'éjection selon la revendication 1, **caractérisé en ce que** ledit au moins un élément (17) est formé par au moins un élément de prise par l'arrière en relief réalisé ou disposé sur la tige (11) de la vis filetée (10), lequel vient en prise par l'arrière et/ou par le dessous avec la partie d'outil (3) associée, en particulier dans la région de l'évidement de vis (16), dans la position de verrouillage d'outil d'éjection.

3. Outil d'éjection selon la revendication 2, **caractérisé en ce que** ledit au moins un élément de prise par l'arrière (17) est prévu sur une région partielle sans filetage de la tige de vis (11), région partielle à laquelle se raccorde directement ou indirectement le filetage (12) vers l'extrémité de la tige de vis.

4. Outil d'éjection selon la revendication 2 ou 3, **caractérisé en ce que** ledit au moins un élément de prise par l'arrière (17) est réalisé en forme de coin et comprend une rampe ascendante en direction de la liaison par prise par l'arrière, et de préférence cette rampe s'appuyant, par un côté frontal de rampe (18), contre la partie d'outil (3) associée dans la position de verrouillage d'outil d'éjection ou étant située à une distance définie de la partie d'outil (3) associée.

5. Outil d'éjection selon l'une des revendications 2 à 4, **caractérisé en ce qu'**un élément de prise par l'arrière unique (17) est prévu sur la tige de vis (11) ou plusieurs éléments de prise par l'arrière espacés les uns des autres les uns des autres dans la direction périphérique de la tige de vis sont prévus.

6. Outil d'éjection selon l'une des revendications précédentes, **caractérisé en ce que** l'évidement de vis (16) dans la partie d'outil (3) est réalisé en tant qu'évidement cylindrique qui entoure la tige de vis cylindrique (11) dans la position de verrouillage d'outil d'éjection de manière adaptée à la forme et au contour avec une dimension d'interstice définie, l'évidement cylindrique comprenant un nombre de fentes de passage (20) situées du côté du bord de l'évidement, lequel nombre correspond au nombre d'éléments de prise par l'arrière (17), fentes à travers lesquelles est guidé ledit au moins un élément de prise par l'arrière (17) lors du passage de la tige de vis (11) à travers l'évidement de vis (16).

7. Outil d'éjection selon les revendications 5 et 6, **caractérisé en ce qu'**un élément de prise par l'arrière unique (17) est prévu sur la tige de vis (11), auquel est associée une fente de passage (20) dans la région de l'évidement de vis (16) de telle sorte que l'évidement de vis (16) présente une forme de type trou de serrure dans son ensemble.

8. Outil d'éjection selon l'une des revendications 2 à 7, **caractérisé en ce que** la vis filetée (10) comprend une tête de vis (13) qui s'appuie contre la partie d'outil (3) dans une liaison d'appui dans la position de verrouillage d'outil d'éjection et/ou qui reçoit une région de bord d'évidement associée de l'évidement de vis (16) entre elle et ledit au moins un élément de prise par l'arrière (17), en particulier la serre entre elle et ledit au moins un élément de prise par l'arrière (17).

9. Outil d'éjection selon l'une des revendications 6 à 8, **caractérisé en ce que** le filetage (12) de la vis filetée (10) et/ou l'écrou (9) est ou sont réalisé(s) de telle sorte que ledit au moins un élément de prise par l'arrière (17) est tourné par rapport à ladite au moins une fente de passage (20) associée à l'élément de prise par l'arrière (17) dans la position de verrouillage d'outil d'éjection et donc vient en prise par le dessous et/ou par l'arrière avec la partie d'outil (3) associée dans la région de l'évidement de vis (16).

10. Outil d'éjection selon la revendication 9, **caractérisé en ce que** le filetage (12) de la vis filetée (10) et/ou l'écrou (9) est ou sont réalisé(s) de telle sorte qu'au moyen de la vis filetée (10), seulement une rotation définie de la vis jusqu'à ce que la position de vissage correspondant à la position de verrouillage d'outil d'éjection ait été atteinte puisse être effectuée.

11. Outil d'éjection selon l'une des revendications précédentes, **caractérisé en ce qu'**un marquage de positionnement (19) d'élément de prise par l'arrière est prévu sur une tête (13) de la vis filetée (10), lequel marquage est disposé au-dessus dudit au moins un élément de prise par l'arrière (17) dans la direction longitudinale de l'axe de vis et lequel indique la position respective dudit au moins un élément de prise par l'arrière (17), en particulier relativement à ladite au moins une fente de passage (20).

12. Outil d'éjection selon l'une des revendications 6 à 12, **caractérisé en ce que** l'écrou (9), qui est formé de préférence par un composant pouvant être inséré dans un évidement d'écrou (14) du côté de la partie d'outil, comprend un marquage de positionnement (21, 23) qui est, vu dans la direction longitudinale de l'axe de vis, associé à une fente de passage (20) et/ou est inséré et reçu, de manière adaptée à la forme et au contour, dans un évidement de marquage de positionnement (24) réalisé dans le prolongement de la fente de passage (20) vu dans la direction longitudinale de l'axe de vis dans la partie d'outil (2) recevant l'écrou (9).

13. Outil d'éjection selon l'une des revendications précédentes, **caractérisé en ce que** la vis filetée (10) comprend une tête de vis (13) dans laquelle est formé un évidement d'outil (25) centré et central, l'évidement d'outil (25) étant réalisé de telle sorte qu'un épaulement d'outil (26) réalisé du côté de la tige de vis puisse être inséré dans celui-ci de manière adaptée à la forme et au contour, l'épaulement d'outil (26) du côté de la tige de vis étant réalisé dans une région de la tige de vis (11) se raccordant à une région filetée, située du côté de l'extrémité, en direction de la tête de vis (13).
